# EUROPÄISCHE PATENTSCHRIFT

(11) **EP 4 118 705 B1**
(45) Veröffentlichungstag und Bekanntmachung des Hinweises auf die Patenterteilung: **28.08.2024**
(21) Anmeldenummer: 21710903.2
(22) Anmeldetag: 04.03.2021
(51) Int. Cl.: H01P 1/04, H01P 5/02, H01P 11/00, B23K 26/32

(54) **VERFAHREN ZUM HERSTELLEN EINES HOHLLEITERS**
METHOD FOR PRODUCING A HOLLOW WAVEGUIDE
PROCÉDÉ DE FABRICATION D'UN GUIDE D'ONDES CREUX

(30) Priorität: 10.03.2020 DE 102020106405
(43) Veröffentlichungstag der Anmeldung: 18.01.2023
(73) Patentinhaber: Tesat Spacecom GmbH & Co. KG, 71522 Backnang (DE); TRUMPF Laser- und Systemtechnik GmbH, 71254 Ditzingen (DE)
(72) Erfinder: BÖLTER, Dr. Ralf, 71522 Backnang (DE); SCHEFFEL, Andreas, 71522 Backnang (DE); KRÜGER, Ingo, 71522 Backnang (DE); HERTE, Matthias, 71522 Backnang (DE); REIS, Helmut, 71254 Ditzingen (DE)
(74) Vertreter: LKGLOBAL Lorenz & Kopf Patentanwalt Attorney at Law PartG mbB
(86) Internationale Anmeldenummer: PCT/EP2021/055490
(87) Internationale Veröffentlichungsnummer: WO 2021/180563

(56) Entgegenhaltungen:
- JP-B2- 6 310 266
- US-A- 3 149 295
- PAMIN S ET AL: "Joining of aluminum waveguides using pulsed laser radiation", 2015 ASIA-PACIFIC MICROWAVE CONFERENCE (APMC), IEEE, vol. 3, 6 December 2015 (2015-12-06), pages 1 - 3, XP032868848, ISBN: 978-1-4799-8765-8, [retrieved on 20160218], DOI: 10.1109/APMC.2015.7413469
- PAMIN SIRKO ET AL: "Laser beam welding of Ku band waveguides for communication satellites", 2017 SBMO/IEEE MTT-S INTERNATIONAL MICROWAVE AND OPTOELECTRONICS CONFERENCE (IMOC), IEEE, 27 August 2017 (2017-08-27), pages 1 - 3, XP033270500, DOI: 10.1109/IMOC.2017.8121077
- ANONYMOUS: "Aluminiumlegierung", 27 August 2019 (2019-08-27), pages 1 - 5, XP055808809, Retrieved from the Internet <URL:https://de.wikipedia.org/w/index.php?title=Aluminiumlegierung&oldid=191718944> [retrieved on 20210528]

## Beschreibung

### Technisches Gebiet

Die vorliegende Beschreibung betrifft ein Verfahren zum Herstellen eines Hohlleiters sowie einen Hohlleiter, der aus mehreren Einzelkomponenten hergestellt oder zusammengesetzt ist. Insbesondere betrifft die Beschreibung einen Ansatz, einen Hohlleiter unter Verwendung von Laserschweißtechniken herzustellen.

### Hintergrund

Hohlleiter (auch als Wellenleiter bezeichnet) werden üblicherweise verwendet, um hochfrequente elektromagnetische Signale zu übertragen. Beispielsweise werden Hohlleiter in Kommunikationssatelliten verwendet, um elektromagnetische Signale zu übertragen, wie beispielsweise Signale, die in einem Signalübertragungspfad zwischen elektrischen Komponenten wie Verstärkern und Sende-/Empfangselementen übertragen werden.

Der Aufbau und die Verwendung von Hohlleitern sowie die Abstimmung von Resonatoren in Hohlleitern ist beispielsweise beschrieben in DE 10 2016 107 955 A1.

Pamin Sirko et al: "Laser beam welding of KU band waveguides for communication satellites", 2017 SBMO/IEEE MTT-S International Microwave and Optoelectronics Conference (IMOC), IEEE, 27 August 2017, beschreibt die Verwendung eines Systems mit einem gepulsten Laser und einer Drahtzuführung mit einem besonderen Haltemechanismus, um einen Aluminiumhohlleiter für das Kᵤ-Band zu verschweißen. Ein ähnliches Herstellungsverfahren eines Hohlleiters wird in PAMIN Sirko et al: "Joining of aluminum waveguides using pulsed laser radiation",2015 ASIA-PACIFIC MICROWAVE CONFERENCE (APMC), IEEE, Bd. 3, 6. Dezember 2015, Seiten 1-3, offenbart.

JP 6 310 266 B2 beschreibt ein Herstellungsverfahren, das in der Lage ist, eine Hochgeschwindigkeitsschweißung durchzuführen. Das Herstellungsverfahren umfasst die folgenden Schritte: Platzieren eines Füllmaterials, das an ein erstes Element aus einem metallischen Material geschweißt werden soll, über einem zweiten Element aus einem Metallmaterial, das mit dem des ersten Elements identisch ist oder sich von diesem unterscheidet; Bohren des zweiten Elements durch das Füllmaterial und Platzieren des Füllmaterials an einer Schweißposition des zweiten Elements durch Einpassen des Füllmaterials in das zweite Element; Überlappen des zweiten Elements und des ersten Elements, um eine Überlappungsverbindung zu bilden; und Hochenergie-Strahlschweißen des ersten Elements und des zweiten Elements.

US 3 149 295 A beschreibt ein Verfahren zum Verbinden eines Hohlleiters durch Überkreuz-Verschweißen von ausgedehnten Flanschen.

Hohlleiter werden typischerweise aus mehreren Einzelstücken hergestellt. Die einzelnen Komponenten werden dabei in der Regel als Standardbauteile hergestellt und bereitgestellt und für einen konkreten Anwendungsfall individuell zusammengesetzt und miteinander verbunden.

Ein Beispiel für einen mechanischen Verbinder zum Zusammensetzen von zwei Hohlleiterabschnitten ist gezeigt in DE 10 2016 125 084 A1.

Eine andere Technik zum Verbinden von einzelnen Hohlleiterabschnitten zu einem Hohlleiter ist das Salzbadlöten. Das Salzbadlöten bringt aber diverse Nachteile mit sich und erfordert in der Regel hohe und aufwändige Sicherheitsvorkehrungen. Das Weichlöten wird meist für versilberte Oberflächen genutzt, jedoch typischerweise an Stellen mit geringer thermischer Belastung.

### Beschreibung

Es kann als Aufgabe betrachtet werden, das Zusammensetzen von einzelnen Hohlleiterabschnitten zu einem Hohlleiter zu vereinfachen und eine hohe Verbindungsgüte zu erreichen.

Diese Aufgabe wird gelöst durch den Gegenstand der unabhängigen Ansprüche. Weitere Ausführungsformen ergeben sich aus den abhängigen Ansprüchen sowie aus der folgenden Beschreibung.

Gemäß einem ersten Aspekt ist ein Verfahren zum Herstellen eines Hohlleiters angegeben. Das Verfahren wird angewendet auf einen Hohlleiter, der aus einem ersten Hohlleiterabschnitt und einem Verbindungsabschnitt zusammengesetzt wird bzw. diese beiden Komponenten aufweist. Der erste Hohlleiterabschnitt enthält eine erste Aluminiumlegierung und der Verbindungsabschnitt enthält eine zweite Aluminiumlegierung. Die erste Aluminiumlegierung ist einer der folgenden AWS-Serien zugeordnet: AWS-2000, AWS-6000, AWS-7000. Die zweite Aluminiumlegierung ist einer der folgenden AWS-Serien zugeordnet: AWS-3000, AWS-4000, AWS-5000. Das Verfahren weist den Schritt auf: Verbinden des ersten Hohlleiterabschnitts mit dem Verbindungsabschnitt mittels eines Laserschweißverfahrens, indem durch das Laserschweißen an einer Schweißnaht zwischen dem ersten Hohlleiterabschnitt und dem Verbindungsabschnitt während des Schweißvorgangs eine dynamische Schmelze erzeugt wird, in welcher die Bestandteile der ersten Aluminiumlegierung und der zweiten Aluminiumlegierung durchmischt sind.

Im Kontext dieser Beschreibung ist unter einer zweiten Aluminiumlegierung eine solche Aluminiumlegierung zu verstehen, welche ohne einen Schweißzusatzwerkstoff schweißbar ist. Umgekehrt gilt, dass unter einer ersten Aluminiumlegierung eine solche Aluminiumlegierung zu verstehen ist, welche nur mit einem Schweißzusatzwerkstoff schweißbar ist. Die zweite Aluminiumlegierung ist also von sich aus und allein schweißbar, wohingegen die erste Aluminiumlegierung von sich aus und allein bzw. ohne Zusatzwerkstoff nicht schweißbar ist.

Der erste Hohlleiterabschnitt kann eine längliche und/oder gerade Form haben. Der Hohlleiter wird aus mehreren Komponenten zusammengesetzt, um den Hohlleiter an einen konkreten Anwendungsfall anzupassen. So kann der Hohlleiter aus zwei oder mehr einzelnen Abschnitten bestehen bzw. zusammengesetzt werden. Es ist denkbar, dass der erste Hohlleiterabschnitt und/oder der Verbindungsabschnitt eine gekrümmte Form haben, beispielsweise um einen Hohlleiter mit einem gewünschten Verlauf herzustellen.

Die Abschnitte, aus denen der Hohlleiter zusammengesetzt wird, können jeweils einzeln als Standardteile vorliegen. Gemäß dem hierin beschriebenen Ansatz ist vorgesehen, dass ein Hohlleiterabschnitt aus einer ersten Aluminiumlegierung mittels Laserschweißen mit einem Verbindungsabschnitt aus einer zweiten Aluminiumlegierung verschweißt wird.

Das Laserschweißen ist ein Schweißverfahren, bei dem Laserstrahlung auf eine zu verschweißende Stelle fokussiert wird. Die mittels der Laserstrahlung zugeführte Energie erhitzt die zu verschweißenden Komponenten auf eine Temperatur oberhalb der Schmelztemperatur mindestens einer der zu verschweißenden Komponenten. Beim Abkühlen der Komponenten bildet sich dann eine Schweißnaht. Laserschweißen kann für das hier beschriebene Verfahren mit oder ohne Schweißzusatzstoffe ausgeführt werden. Dadurch, dass einer der Abschnitte aus einer zweiten (ohne Zusatzwerkstoff schweißbaren) Aluminiumlegierung besteht oder eine solche enthält, kann grundsätzlich auf einen Schweißzusatzwerkstoff verzichtet werden, was das Verfahren weiter vereinfacht.

Das Verfahren ermöglicht es, einen Hohlleiter aus mehreren Abschnitten (erster Hohlleiterabschnitt, Verbindungsabschnitt) mit geringem Aufwand zusammenzusetzen und herzustellen. Dies wird insbesondere dadurch ermöglicht, dass von zwei zu verbindenden Abschnitten nur einer eine zweite (ohne Zusatzwerkstoff schweißbare) Aluminiumlegierung aufweisen muss. Der andere Abschnitt kann auch eine erste (ohne Zusatzwerkstoff nicht schweißbare) Aluminiumlegierung aufweisen. Dennoch kann in dieser Zusammensetzung mittels Laserschweißen eine Schweißnaht gebildet werden, welche für die Zwecke des so hergestellten Hohlleiters ausreichend ist, um die für einen Hohlleiter geforderten Signalübertragungseigenschaften zu gewährleisten.

In anderen Worten wird also mittels Laserschweißen ein Element aufweisend eine zweite Aluminiumlegierung mit einem Element aufweisend eine erste Aluminiumlegierung verschweißt, um einen hier beschriebenen Hohlleiter herzustellen. Durch das Laserschweißen wird im Bereich der Schweißnaht während des Schweißvorgangs eine sehr dynamische Schmelze erzeugt, in welcher die Bestandteile der zweiten Aluminiumlegierung und der ersten Aluminiumlegierung durchmischt sind. Dies ermöglicht es, den Abschnitt aufweisend eine zweite Aluminiumlegierung mit dem Abschnitt aufweisend eine erste Aluminiumlegierung ohne Zusatzwerkstoff miteinander zu verschweißen.

Es ist denkbar, dass das Verfahren mit Hohlleiterabschnitten aus anderen metallischen Materialien als Aluminium angewendet wird, wobei jedoch einer der Abschnitte mittels Laserschweißen ohne Zusatzwerkstoff schweißbar und der andere ohne Zusatzwerkstoff nicht schweißbar ist.

Ob ein Material als ohne Zusatzwerkstoff schweißbar oder ohne Zusatzwerkstoff nicht schweißbar zu kategorisieren ist, bezieht sich auf dessen Schweißbarkeit mittels Laserschweißen.

Der Verbindungsabschnitt, welcher eine zweite Aluminiumlegierung enthält, kann insbesondere ein kleines und/oder komplexes Teil des Hohlleiters sein, wie z.B. ein Winkelstück. Somit können die langen, geraden Abschnitte weiterhin aus ohne Zusatzwerkstoff nicht schweißbarem Material gefertigt sein bzw. ein ohne Zusatzwerkstoff nicht schweißbares Material enthalten.

Gemäß einer Ausführungsform weist das Verfahren weiterhin auf: Platzieren des Verbindungsabschnitts mit Bezug zu dem ersten Hohlleiterabschnitt, so dass der Verbindungsabschnitt an dem ersten Hohlleiterabschnitt mindestens punktuell anliegt, und Verbinden des ersten Hohlleiterabschnitts mit dem Verbindungsabschnitt mittels des Laserschweißverfahrens dort, wo der Verbindungsabschnitt an dem ersten Hohlleiterabschnitt anliegt.

Der erste Hohlleiterabschnitt liegt an dem Verbindungsabschnitt an, wenn diese beiden Abschnitte mindestens punktuell in unmittelbarer Nähe nebeneinander oder aneinander platziert sind, so dass an diesen Stellen, wo die beiden Abschnitte aneinander anliegen, eine Verbindung mittels Laserschweißen hergestellt werden kann. Der erste Hohlleiterabschnitt und der Verbindungsabschnitt können aneinander anliegen, übereinander liegen, teilweise ineinandergesteckt werden, um anschließend miteinander verschweißt zu werden.

Gemäß einer weiteren Ausführungsform weist das Verfahren weiterhin auf: Platzieren des Verbindungsabschnitts mit Bezug zu dem ersten Hohlleiterabschnitt, so dass der Verbindungsabschnitt den ersten Hohlleiterabschnitt in Längsrichtung des ersten Hohlleiterabschnitts teilweise überlappt.

Somit kann ein Hohlleiter hergestellt werden, dessen Signalübertragungseigenschaften in dem beabsichtigten Hochfrequenzbereich eine hohe Güte haben.

Gemäß einer weiteren Ausführungsform umfasst der Verbindungsabschnitt den ersten Hohlleiterabschnitt in Umfangsrichtung vollständig.

Der Verbindungsabschnitt wird also auf den ersten Hohlleiterabschnitt aufgesteckt bzw. aufgeschoben. Selbstverständlich ist auch denkbar und möglich, dass der erste Hohlleiterabschnitt auf den Verbindungsabschnitt gesteckt oder aufgeschoben wird. Es kann diejenigen Variante verwendet werden, welche den Vorgang des Laserschweißens in dem jeweiligen Anwendungsfall vereinfacht.

Gemäß einer weiteren Ausführungsform umfasst der Hohlleiter einen zweiten Hohlleiterabschnitt, wobei sich der zweite Hohlleiterabschnitt an den Verbindungsabschnitt anschließt.

Der Verbindungsabschnitt befindet sich demnach zwischen dem ersten Hohlleiterabschnitt und dem zweiten Hohlleiterabschnitt und wird dazu verwendet, den ersten Hohlleiterabschnitt und den zweiten Hohlleiterabschnitt miteinander zu verbinden und einen Hohlleiter zu bilden.

Gemäß einer weiteren Ausführungsform ist der zweite Hohlleiterabschnitt mit dem Verbindungsabschnitt einstückig ausgestaltet.

In dieser Ausführungsform ist der Verbindungsabschnitt ein Teil des zweiten Hohlleiterabschnitts. Der Verbindungsabschnitt kann ein Ende des zweiten Hohlleiterabschnitts darstellen, welches dazu verwendet wird, mit dem ersten Hohlleiterabschnitt verbunden/verschweißt zu werden. Eine einzelne Schweißnaht kann in dieser Ausführungsform genügen, um den Hohlleiter herzustellen.

Gemäß einer weiteren Ausführungsform ist der Verbindungsabschnitt als Muffe ausgestaltet, welche sowohl den ersten Hohlleiterabschnitt als auch den zweiten Hohlleiterabschnitt an einer jeweiligen Außenfläche in Längsrichtung mindestens teilweise überlappt und in Umfangsrichtung vollständig umfasst, wobei die Muffe mit dem ersten Hohlleiterabschnitt und dem zweiten Hohlleiterabschnitt mittels Laserschweißen verbunden wird.

Diese Ausführungsform sieht vor, dass der Verbindungsabschnitt ein gesondertes Bauteil ist und verwendet wird, um den ersten Hohlleiterabschnitt mit dem zweiten Hohlleiterabschnitt zu verbinden. Bei dieser Verbindung können zwei getrennte Schweißnähten gebildet werden, um den Verbindungsabschnitt einerseits mit dem ersten Hohlleiterabschnitt und andererseits mit dem zweiten Hohlleiterabschnitt zu verschweißen.

Wenn der erste und zweite Hohlleiterabschnitt in die Muffe eingesteckt werden (oder umgekehrt), kann dies die mechanische Stabilität des Hohlleiters erhöhen, weil der Überlapp in dem Einsteckbereich diese Stabilität gewährleistet.

Gemäß einer weiteren Ausführungsform enthält der zweite Hohlleiterabschnitt eine erste Aluminiumlegierung wie oben angegeben, die also ohne Zusatzwerkstoff nicht schweißbar ist. Diese Aluminiumlegierung ist eine erste Aluminiumlegierung, die einer der folgenden AWS-Serien zugeordnet ist: AWS-2000, AWS-6000, AWS-7000.

Die Muffe, welche aus einer zweiten Aluminiumlegierung besteht oder eine solche enthält, ist daher geeignet, zwei Hohlleiterabschnitte aus einem ersten Material, welches ohne Zusatzwerkstoff nicht schweißbar ist, miteinander zu verbinden.

Gemäß einer weiteren Ausführungsform hat die zweite Aluminiumlegierung einen Siliziumanteil von mehr als 3 Gewichtsprozent und die erste Aluminiumlegierung hat einen Siliziumanteil von höchstens 3 Gewichtsprozent.

Erfindungsgemäß wird für den Abschnitt oder die Abschnitte aus der zweiten Aluminiumlegierung eine Legierung nach den Vorgaben der Serien 3000, 4000 und 5000 nach AWS (American Welding Society) verwendet. Für den Abschnitt oder die Abschnitte aus der ersten Aluminiumlegierung wird eine Legierung nach den Vorgaben der Serien 2000, 6000 und 7000 nach AWS verwendet.

In der 2000-Serie (AlCu) ist Kupfer Hauptlegierungsbestandteil. Die 3000-Serie (AlMn) hat Mangan als Hauptlegierungsbestandteil. Die 4000-Serie (AlSi) hat Silizium als Hauptlegierungsbestandteil. Die 5000-Serie (AlMg) hat Magnesium als Hauptlegierungsbestandteil. Die 6000-Serie (AlMgSi) ist eine Legierung, die Silizium und Magnesium enthält. Die 7000-Serie (AlZn) hat Zink als Hauptlegierung.

In einem Beispiel und besonders bevorzugt weist der erste Hohlleiterabschnitt ein Material aus der AWS-6000 Serie auf und der Verbindungsabschnitt weist in Material der AWS-4000 Serie auf.

Gemäß einem weiteren Aspekt ist ein Hohlleiter zum Übertragen von Hochfrequenzsignalen angegeben. Der Hohlleiter weist einen ersten Hohlleiterabschnitt, welcher eine erste Aluminiumlegierung aufweist, und einen Verbindungsabschnitt, welcher eine zweite Aluminiumlegierung enthält, auf. Die erste Aluminiumlegierung ist einer der folgenden AWS-Serien zugeordnet: AWS-2000, AWS-6000, AWS-7000. Die zweite Aluminiumlegierung ist einer der folgenden AWS-Serien zugeordnet: AWS-3000, AWS-4000, AWS-5000. Der erste Hohlleiterabschnitt und der Verbindungsabschnitt sind mittels einer Laserschweißnaht miteinander verbunden, wobei die Laserschweißnaht aus einer dynamischen Schmelze hervorgeht, in welcher die Bestandteile der ersten Aluminiumlegierung und der zweiten Aluminiumlegierung durchmischt sind.

Der Verbindungsabschnitt enthält zumindest in einem Bereich, in welchem er mit dem ersten Hohlleiterabschnitt verschweißt ist, eine zweite Aluminiumlegierung auf.

Mit Bezug zu dem Verfahren wurden auch strukturelle Merkmale des Hohlleiters beschrieben. Diese strukturellen Merkmale gelten auch als Merkmale des Hohlleiters als solches ohne spezifischen Bezug zu dem Herstellungsverfahren.

D.h., was mit Bezug zu dem Verfahren beschrieben wurde, gilt analog auch für den Hohlleiter als solches.

### Kurze Beschreibung der Figuren

Nachfolgend wird anhand der beigefügten Zeichnungen näher auf Ausführungsbeispiele der Erfindung eingegangen. Die Darstellungen sind schematisch und nicht maßstabsgetreu. Gleiche Bezugszeichen beziehen sich auf gleiche oder ähnliche Elemente. Es zeigen:
- **Fig. 1**: eine schematische isometrische Darstellung eines Hohlleiters gemäß einem Ausführungsbeispiel.
- **Fig. 2**: eine schematische Darstellung eines Verbindungsabschnitts eines Hohlleiters gemäß einem weiteren Ausführungsbeispiel.
- **Fig. 3**: eine schematische Darstellung des Querschnitts eines Verbindungsabschnitts eines Hohlleiters gemäß einem weiteren Ausführungsbeispiel.
- **Fig. 4**: eine schematische Darstellung des Querschnitts eines Hohlleiters gemäß einem weiteren Ausführungsbeispiel.
- **Fig. 5**: eine schematische Darstellung des Querschnitts eines Hohlleiters gemäß einem weiteren Ausführungsbeispiel.
- **Fig. 6**: eine schematische Darstellung des Querschnitts eines Hohlleiters gemäß einem weiteren Ausführungsbeispiel.
- **Fig. 7**: eine schematische Darstellung des Querschnitts eines Hohlleiters gemäß einem weiteren Ausführungsbeispiel.
- **Fig. 8**: eine schematische Darstellung der Schritte eines Verfahrens gemäß einem weiteren Ausführungsbeispiel.

### Detaillierte Beschreibung von Ausführungsbeispielen

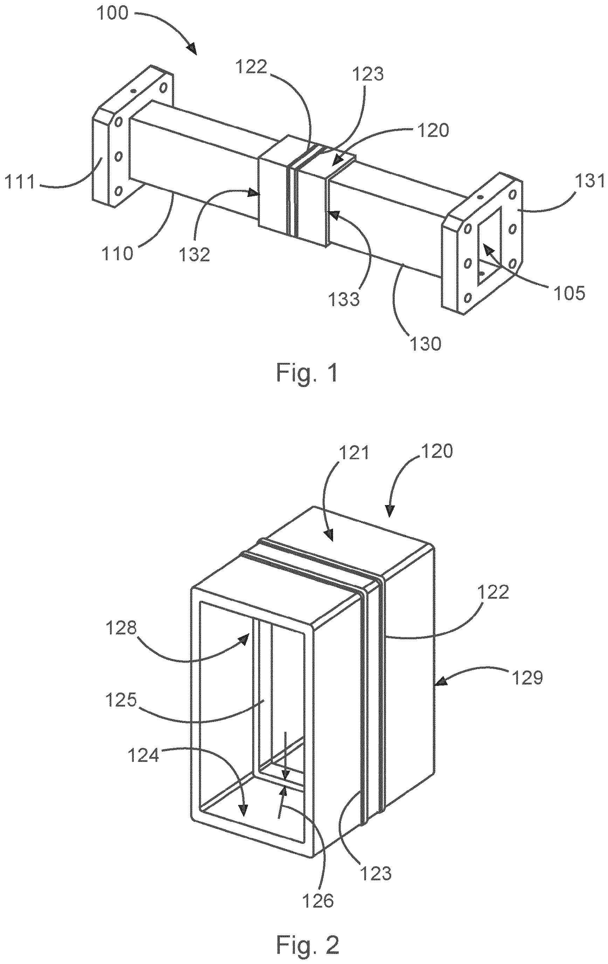

Fig. 1 zeigt einen Hohlleiter 100 bestehend aus einem ersten Hohlleiterabschnitt 110, einem Verbindungsabschnitt 120, und einem zweiten Hohlleiterabschnitt 130. Der erste Hohlleiterabschnitt 110 ist mittels des Verbindungsabschnitts 120 mit den zweiten Hohlleiterabschnitt 130 verbunden.

Der Hohlleiter 100 bildet einen Hohlraum 105 aus, in welchem sich eine elektromagnetische Welle ausbreiten kann. Der Hohlraum 105 kann verschiedene Geometrien haben, welche an die zu übertragenden Signale angepasst werden können. Der hier gezeigte rechteckige Querschnitt des Hohlraums 105 ist damit nicht als einschränkend für die Form des Querschnitts des Hohlraums zu betrachten.

Beide Hohlleiterabschnitt 110, 130 weisen an ihren entgegengerichteten Enden jeweils einen Flansch 111, 131 auf, welcher dafür verwendet wird, den Hohlleiter 110 mit angrenzenden Komponenten zu verbinden. Die Flansche werden beispielsweise mittels Schrauben an einer angrenzenden Komponente verbunden, wofür die Löcher in den Flanschen 111, 131 verwendet werden.

In dem Beispiel der Fig. 1 sind die Hohlleiterabschnitte 110, 130 aus einer ersten Aluminiumlegierung gefertigt. Der Verbindungsabschnitt 120 ist eine Muffe, die mittels Laserschweißnähten 122, 123 mit den Hohlleiterabschnitten 110, 130 verbunden ist.

Der Verbindungsabschnitt 120 ist so ausgestaltet, dass die Hohlleiterabschnitte 110, 130 aus entgegengesetzten Richtungen in jeweils eine Öffnung der Muffe eingesteckt werden können. Der Verlauf der Schweißnähte 122, 123 kann auf der Außenfläche der Muffe markiert sein. Anschließend kann eine Laserschweißvorrichtung diese Markierung abfahren und dabei die Schweißnaht erzeugen. Jede Schweißnaht 122, 123 stellt eine Verbindung zwischen der Muffe und einem Hohlleiterabschnitt 110, 130 her.

In dem Beispiel der Fig. 1 sind zwei weitere Schweißnähte 132 und 133 an den gegenüberliegenden Enden des Verbindungsabschnittes 120 platziert und verbinden diese Enden mit der Außenfläche von jeweils einem Hohlleiterabschnitt 110, 130. Hierdurch werden offene Räume zwischen der Muffe und den Hohlleiterabschnitten vermieden. Die Schweißnähte 122 und 123 sorgen für die elektrische Primärverbindung zwischen den beiden Hohlleitern und die Schweißnähte 132 und 133 bieten eine erhöhte mechanische Festigkeit.

Fig. 2 zeigt eine Ansicht des Verbindungsabschnitts 120 ohne die Hohlleiterabschnitte 110, 130. Der Verbindungsabschnitt 120 hat eine Außenfläche 121 und eine Innenfläche 124. Die Hohlleiterabschnitte 110, 130 liegen an der Innenfläche 124 an, wenn sie in den Verbindungsabschnitt 120 eingesteckt sind.

Auf der Innenfläche 124 weist der Verbindungsabschnitt 120 einen innen umlaufenden Vorsprung 125 auf. Der Vorsprung erstreckt sich von der Innenfläche 124 in Richtung der Mittelöffnung des Verbindungsabschnitts, also weg von der Innenfläche, und hat eine Höhe 126.

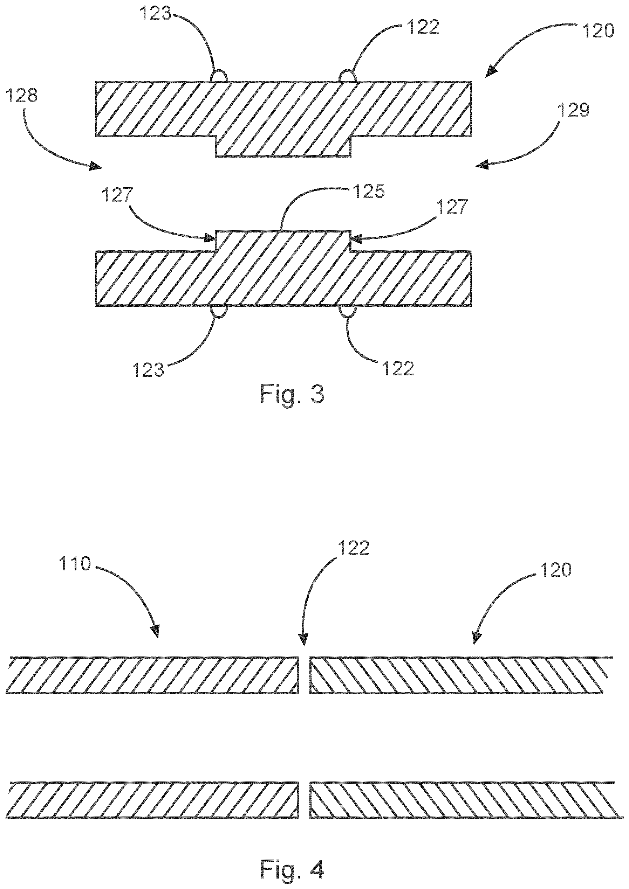

Der Vorsprung 125 bildet zwei Anstoßflächen 127 (siehe Fig. 3), welche in Richtung der Öffnungen des Verbindungsabschnitts weisen. Die Anstoßflächen erstrecken sich bevorzugt senkrecht von der Innenfläche weg. Die Anstoßflächen dienen dazu, dass sie die Enden der Hohlleiterabschnitte 110, 130 kontaktieren, wenn die Hohlleiterabschnitte 110, 130 in den Verbindungsabschnitt 120 eingesteckt sind. Damit legen die Anstoßflächen die Position der Hohlleiterabschnitte in dem Verbindungsabschnitt fest. Um eine zuverlässige Verbindung zwischen Verbindungsabschnitt und Hohlleiterabschnitten zu erzeugen, werden die Hohlleiterabschnitt in den Verbindungsabschnitt eingeschoben, bis ein Ende des jeweiligen Hohlleiterabschnitts an die Anstoßfläche anstößt.

Der Vorsprung 125 hat eine Höhe 126. Diese Höhe entspricht bevorzugt der Materialstärke der zu verbindenden Hohlleiterabschnitte. Somit gibt es in dem Hohlraum 105 des zusammengesetzten Hohlleiters 110 keine wesentliche Änderung des Querschnitts, was für die Ausbreitung einer elektromagnetischen Welle in dem Hohlleiter von Vorteil ist.

Es ist möglich, eine Muffe ohne Vorsprung 125 auf der Innenfläche zu verwenden. In dem Fall werden die zwei in die Muffe eingeschobenen Hohlleiterabschnitte so weit eingeschoben, bis ihre Stirnflächen aneinander angrenzen. Eine Schweißnaht kann dann an der Stelle, an der die Stirnflächen der Hohlleiterabschnitte aneinander angrenzen, erzeugt werden und das geschmolzene Material verbindet die beiden Hohlleiterabschnitte innerhalb der Muffe.

Fig. 3 zeigt eine schematische Schnittansicht des Verbindungsabschnitts 120. Der auf der Innenfläche des Verbindungsabschnitts angeordnete Vorsprung 125 erstreckt sich über den gesamten Umfang des Verbindungsabschnitts. Allerdings sind in Fig. 3 lediglich die Schnittflächen gezeigt.

Der Vorsprung 125 hat zwei Anstoßflächen 127, welche in Richtung der an entgegengesetzten Enden des Verbindungsabschnitts angeordneten Öffnungen 128, 129 zeigen. Die Hohlleiterabschnitte 110, 130 werden in die Öffnungen des Verbindungsabschnitts eingesteckt und so weit eingeschoben, bis sie an den Anstoßflächen 127 anliegen.

Der Verlauf der Schweißnähte 122, 123 ist auf der Außenfläche 121 des Verbindungsabschnitts gezeigt. Die Schweißnähte verlaufen in Umfangsrichtung des Vorsprungs entlang der Anstoßflächen. Somit kann eine Laserschweißvorrichtung die Schweißnähte erzeugen, wenn ein entsprechender Laserstrahl auf die Außenfläche gerichtet und entlang des vorgesehenen Schweißnahtverlaufs bewegt wird. Hierbei wird eine Verbindung zwischen dem Verbindungsabschnitt und dem Hohlleiterabschnitt erzeugt, und zwar im Bereich der Anstoßflächen 127. Der Verlauf der Schweißnähte kann auf der Außenfläche markiert sein.

Wenn die Hohlleiterabschnitte 110, 130 in die Öffnungen 128, 129 des Verbindungsabschnitts eingeschoben werden und mit dem Verbindungsabschnitt verschweißt sind, bildet der Vorsprung 125 und die Hohlräume der Hohlleiterabschnitte einen einheitlichen Hohlraum, welcher sich über die gesamte Länge des Hohlleiters erstreckt. Dabei verändert sich der Querschnitt des Hohlraums entlang der Längsrichtung des Hohlleiters kaum oder nur unmerklich. Dies wird insbesondere dadurch ermöglicht, dass die Schweißnähte 122, 123 aus Richtung der Außenfläche 121 des Verbindungsabschnitts erzeugt werden. Es gibt damit höchstens einen geringfügige Materialaufhäufung an der Innenfläche des Hohlleiters.

Es sei darauf hingewiesen, dass der Verbindungsabschnitt 120 sowohl als Verbindungsteil als auch als Hohlleiterabschnitt fungieren kann. Insbesondere im Bereich des Vorsprungs hat der Verbindungsabschnitt in der Signalübertragung die gleiche Funktion wie der Hohlleiterabschnitt 110, 130.

Die Fig. 4 bis 7 zeigen Verbindungsmöglichkeiten von Hohlleiterabschnitten, welche ohne eine gesonderte Muffe auskommen. In den Beispielen der Fig. 4 bis 7 werden an einer Verbindungsstelle zwei Komponenten miteinander verschweißt. Anstelle eines gesonderten Verbindungsabschnitts 120 werden zwei Abschnitte 110, 120 mit unterschiedlichen Eigenschaften an den zu verschweißenden Stellen verwendet. Dies bedeutet, dass ein Abschnitt 110 ein erstes Material (bevorzugt eine erste Aluminiumlegierung) enthalten kann, wohingegen der Abschnitt 120 ein zweites Material mindestens an der Verbindungsstelle enthält (bevorzugt eine zweite Aluminiumlegierung).

Fig. 4 zeigt zwei Abschnitte 110, 120, die an den Stirnflächen ihrer zu verbindenden Enden miteinander verschweißt werden. Der Querschnitt der Abschnitte 110, 120 entspricht einander und es gibt keine sprunghafte Veränderung des Querschnitts des Hohlraums an der Verbindungsstelle. Die Schweißnaht wird mittels Laserschweißen entlang der aneinander anliegenden Stirnflächen der Abschnitte 110, 120 erzeugt.

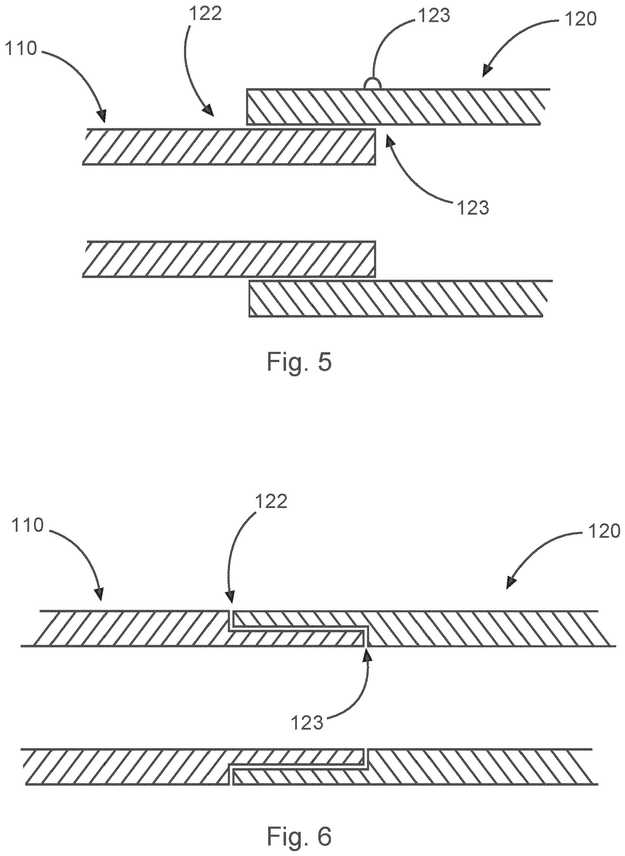

Fig. 5 zeigt ein Beispiel, in welchem zwei Abschnitte 110, 120 zu einem Hohlleiter verbunden werden, in welchem der Abschnitt 110 in den Abschnitt 120 eingesteckt wird. Die Abschnitte 110, 120 werden an ihren jeweiligen Enden mit dem anderen Abschnitt 110, 120 verschweißt. Dieser Schweißvorgang kann jeweils ausgehend von der Außenfläche der Abschnitte 110, 120 erzeugt werden, wie beispielhaft an den Schweißnähten 122, 123 gezeigt.

Fig. 6 zeigt zwei ineinandergesteckte Abschnitte 110, 120 mit gestuften Enden. Das Ende des Abschnitts 110 weist ein reduzierten Außendurchmesser auf, wohingegen das Ende des Abschnitts 120 einen erweiterten Innendurchmesser aufweist. Der reduzierte Außendurchmesser des Endes des Abschnitts 110 wird in den erweiterten Innendurchmesser des Endes des Abschnitts 120 gesteckt. Bei gleicher Länge der gestuften Enden (in Längsrichtung des Hohlleiters, also in Fig. 6 von links nach rechts) überlappen sich die Enden vollständig. Der Querschnitt des Hohlraums in dem Hohlleiter bleibt gleich. Die Schweißnähte verlaufen in diesem Beispiel so, dass die Enden des einen Abschnitts mit dem anderen Abschnitt verschweißt sind.

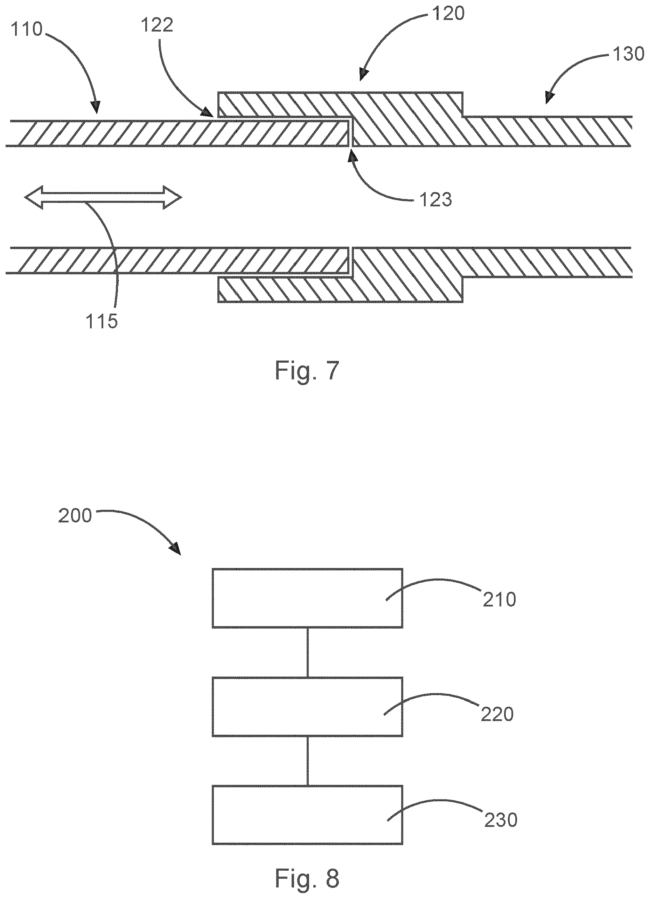

Fig. 7 zeigt einen Aufbau, welcher als Kombination der Beispiele aus Fig. 6 und Fig. 1 bis 3 betrachtet werden kann. In einem Verbindungsbereich zwischen den Hohlleiterabschnitten 110 und 130 ist ein Verbindungsabschnitt 120 vorgesehen. Der Abschnitt 120 ist einstückig mit dem Abschnitt 130 ausgestaltet. Der Abschnitt 120 hat zwar einen größeren Außendurchmesser als die Abschnitte 110 und 130, allerdings bleibt der Innendurchmesser und auch der Querschnitt des Hohlraums in Längsrichtung 115 gleich. Der Hohlleiterabschnitt 110 und auch der Hohlleiterabschnitt 130 können so mit einer minimalen Wandstärke ausgestaltet werden, weil der Verbindungsabschnitt 120 einen erweiterten Außendurchmesser hat, so dass der Hohlleiterabschnitt 110 in dem Verbindungsabschnitt 120 aufgenommen werden kann bzw. darin eingesteckt werden kann, ohne dass an dieser Stelle Material des Hohlleiterabschnitts 110 abgetragen werden muss. In anderen Worten muss der Außendurchmesser des Hohlleiterabschnitts 110 nicht reduziert werden, um den Hohlleiterabschnitt 110 in den Verbindungsabschnitt 120 einzustecken.

Auch in diesem Beispiel werden die Schweißnähte von außen mittels Laserschweißen platziert, wie mit Bezug zu den anderen Beispielen beschrieben.

Fig. 8 zeigt beispielhaft den Ablauf eines Verfahrens 200 zum Herstellen eines Hohlleiters gemäß den hierin beschriebenen Prinzipien. In einem ersten Schritt 210 wird ein erster Hohlleiterabschnitt bereitgestellt, wobei der erste Hohlleiterabschnitt ein erstes Material (bevorzugt eine erste Aluminiumlegierung) enthält. In einem zweiten Schritt 220 wird ein Verbindungsabschnitt bereitgestellt, wobei der Verbindungsabschnitt ein zweites Material (bevorzugt eine zweite Aluminiumlegierung) enthält. In einem dritten Schritt 230 wird eine Schweißverbindung zwischen dem ersten Hohlleiterabschnitt und dem Verbindungsabschnitt mittels Laserschweißen hergestellt.

Dieses Verfahren ermöglicht es, auf aufwändige Verfahren wie Salzbadlöten zu verzichten und solche Verfahren durch Laserschweißen zu ersetzen. Ebenso kann auf einen Schweißzusatzstoff verzichtet werden, weil das zweite Material die für die Schweißverbindung nötige Schmelze bildet.

### Bezugszeichenliste

- 100: Hohlleiter
- 105: Hohlraum
- 110: erster Hohlleiterabschnitt
- 111: Flansch
- 115: Längsrichtung
- 120: Verbindungsabschnitt
- 121: Außenfläche
- 122: erste Schweißnaht
- 123: zweite Schweißnaht
- 124: Innenfläche
- 125: Vorsprung
- 126: Höhe
- 127: Anstoßfläche
- 128: erste Öffnung
- 129: zweite Öffnung
- 130: zweiter Hohlleiterabschnitt
- 131: Flansch
- 132: Schweißnaht
- 133: Schweißnaht

## Patentansprüche

1. Verfahren zum Herstellen eines Hohlleiters (100),
wobei der Hohlleiter (100) einen ersten Hohlleiterabschnitt (110) und einen Verbindungsabschnitt (120) aufweist;
wobei der erste Hohlleiterabschnitt (110) eine erste Aluminiumlegierung enthält, wobei die erste Aluminiumlegierung einer der folgenden AWS-Serien zugeordnet ist: AWS-2000, AWS-6000, AWS-7000;
wobei der Verbindungsabschnitt (120) eine zweite Aluminiumlegierung enthält, wobei die zweite Aluminiumlegierung einer der folgenden AWS-Serien zugeordnet ist: AWS-3000, AWS-4000, AWS-5000;
wobei das Verfahren den Schritt aufweist:
Verbinden des ersten Hohlleiterabschnitts (110) mit dem Verbindungsabschnitt (120) mittels eines Laserschweißverfahrens, indem durch das Laserschweißen an einer Schweißnaht zwischen dem ersten Hohlleiterabschnitt und dem Verbindungsabschnitt während des Schweißvorgangs eine dynamische Schmelze erzeugt wird, in welcher die Bestandteile der ersten Aluminiumlegierung und der zweiten Aluminiumlegierung durchmischt sind.

2. Verfahren nach Anspruch 1,
wobei das Verfahren weiterhin aufweist:
Platzieren des Verbindungsabschnitts (120) mit Bezug zu dem ersten Hohlleiterabschnitt (110), so dass der Verbindungsabschnitt (120) an dem ersten Hohlleiterabschnitt (110) mindestens punktuell anliegt;
Verbinden des ersten Hohlleiterabschnitts (110) mit dem Verbindungsabschnitt (120) mittels des Laserschweißverfahrens dort, wo der Verbindungsabschnitt (120) an dem ersten Hohlleiterabschnitt (110) anliegt.

3. Verfahren nach Anspruch 1 oder 2,
wobei das Verfahren weiterhin aufweist:
Platzieren des Verbindungsabschnitts (120) mit Bezug zu dem ersten Hohlleiterabschnitt (110), so dass der Verbindungsabschnitt (120) den ersten Hohlleiterabschnitt (110) in Längsrichtung (115) des ersten Hohlleiterabschnitts (110) teilweise überlappt.

4. Verfahren nach Anspruch 3,
wobei der Verbindungsabschnitt (120) den ersten Hohlleiterabschnitt (110) in Umfangsrichtung vollständig umfasst.

5. Verfahren nach einem der vorstehenden Ansprüche,
wobei der Hohlleiter (100) einen zweiten Hohlleiterabschnitt (130) umfasst;
wobei sich der zweite Hohlleiterabschnitt (130) an den Verbindungsabschnitt (120) anschließt.

6. Verfahren nach Anspruch 5,
wobei der zweite Hohlleiterabschnitt (130) mit dem Verbindungsabschnitt (120) einstückig ausgestaltet ist.

7. Verfahren nach Anspruch 5,
wobei der Verbindungsabschnitt (120) als Muffe ausgestaltet ist, welche sowohl den ersten Hohlleiterabschnitt (110) als auch den zweiten Hohlleiterabschnitt (120) an einer jeweiligen Außenfläche in Längsrichtung mindestens teilweise überlappt und in Umfangsrichtung vollständig umfasst, wobei die Muffe mit dem ersten Hohlleiterabschnitt (110) und dem zweiten Hohlleiterabschnitt (120) mittels Laserschweißen verbunden wird.

8. Verfahren nach Anspruch 5 oder 7,
wobei der zweite Hohlleiterabschnitt (130) eine Aluminiumlegierung enthält, welche einer der folgenden AWS-Serien zugeordnet ist: AWS-2000, AWS-6000, AWS-7000.

9. Verfahren nach einem der vorstehenden Ansprüche,
wobei die zweite Aluminiumlegierung einen Siliziumanteil von mehr als 3 Gewichtsprozent hat;
wobei die erste Aluminiumlegierung einen Siliziumanteil von höchstens 3 Gewichtsprozent hat.

10. Hohlleiter (100) zum Übertragen von Hochfrequenzsignalen, aufweisend:
einen ersten Hohlleiterabschnitt (110), welcher eine erste Aluminiumlegierung aufweist, wobei die erste Aluminiumlegierung einer der folgenden AWS-Serien zugeordnet ist: AWS-2000, AWS-6000, AWS-7000;
einen Verbindungsabschnitt (120), welcher eine zweite Aluminiumlegierung enthält, wobei die zweite Aluminiumlegierung einer der folgenden AWS-Serien zugeordnet ist: AWS-3000, AWS-4000, AWS-5000;
wobei der erste Hohlleiterabschnitt (110) und der Verbindungsabschnitt (120) mittels einer Laserschweißnaht miteinander verbunden sind;
wobei die Laserschweißnaht aus einer dynamischen Schmelze hervorgeht, in welcher die Bestandteile der ersten Aluminiumlegierung und der zweiten Aluminiumlegierung durchmischt sind.

## Claims

1. Process for producing a hollow conductor (100), wherein the hollow conductor (100) has a first hollow-conductor portion (110) and a connecting portion (120); wherein the first hollow-conductor portion (110) contains a first aluminium alloy, wherein the first aluminium alloy is associated with one of the following AWS series:
AWS-2000, AWS-6000, AWS-7000;
wherein the connecting portion (120) contains a second aluminium alloy, wherein the second aluminium alloy is associated with one of the following AWS series: AWS-3000, AWS-4000, AWS-5000;
wherein the process comprises the following step:
connecting the first hollow-conductor portion (110) to the connecting portion (120) by means of a laser welding process, in that the laser welding produces a dynamic melt, in which the constituent parts of the first aluminium alloy and the second aluminium alloy are blended, at a weld seam between the first hollow-conductor portion and the connecting portion during the welding operation.

2. Process according to Claim 1,
wherein the process also comprises:
placing the connecting portion (120) in relation to the first hollow-conductor portion (110) such that the connecting portion (120) lies against the first hollow-conductor portion (110) at least at certain points;
connecting the first hollow-conductor portion (110) to the connecting portion (120) by means of the laser welding process at locations where the connecting portion (120) lies against the first hollow-conductor portion (110) .

3. Process according to Claim 1 or 2,
wherein the process also comprises:
placing the connecting portion (120) in relation to the first hollow-conductor portion (110) such that the connecting portion (120) partially overlaps the first hollow-conductor portion (110) in the longitudinal direction (115) of the first hollow-conductor portion (110) .

4. Process according to Claim 3,
wherein the connecting portion (120) peripherally completely encompasses the first hollow-conductor portion (110).

5. Process according to one of the preceding claims,
wherein the hollow conductor (100) comprises a second hollow-conductor portion (130);
wherein the second hollow-conductor portion (130) adjoins the connecting portion (120).

6. Process according to Claim 5,
wherein the second hollow-conductor portion (130) is formed in one piece with the connecting portion (120).

7. Process according to Claim 5,
wherein the connecting portion (120) is in the form of a bushing, which longitudinally at least partially overlaps and peripherally completely encompasses both the first hollow-conductor portion (110) and the second hollow-conductor portion (120) on a respective outer surface,
wherein the bushing is connected to the first hollow-conductor portion (110) and the second hollow-conductor portion (120) by means of laser welding.

8. Process according to Claim 5 or 7,
wherein the second hollow-conductor portion (130) contains an aluminium alloy associated with one of the following AWS series: AWS-2000, AWS-6000, AWS-7000.

9. Process according to one of the preceding claims,
wherein the second aluminium alloy has a silicon content of more than 3 percent by weight;
wherein the first aluminium alloy has a silicon content of at most 3 percent by weight.

10. Hollow conductor (100) for transmitting highfrequency signals, comprising:
a first hollow-conductor portion (110) which contains a first aluminium alloy, wherein the first aluminium alloy is associated with one of the following AWS series: AWS-2000, AWS-6000, AWS-7000;
a connecting portion (120), which contains a second aluminium alloy, wherein the second aluminium alloy is associated with one of the following AWS series: AWS-3000, AWS-4000, AWS-5000;
wherein the first hollow-conductor portion (110) and the connecting portion (120) are connected to one another by a laser-weld seam;
wherein the laser-weld seam originates from a dynamic melt in which the constituents of the first aluminium alloy and the second aluminium alloy are blended.

## Revendications

1. Procédé de fabrication d'un guide d'ondes creux (100),
dans lequel le guide d'ondes creux (100) présente une première section de guide d'ondes creux (110) et une section de liaison (120) ;
dans lequel la première section de guide d'ondes creux (110) contient un premier alliage d'aluminium, le premier alliage d'aluminium étant associé à l'une des séries AWS suivantes : AWS-2000, AWS-6000, AWS-7000 ;
dans lequel la section de liaison (120) contient un deuxième alliage d'aluminium, le deuxième alliage d'aluminium étant associé à l'une des séries AWS suivantes : AWS-3000, AWS-4000, AWS-5000 ;
dans lequel le procédé présente l'étape suivante :
la liaison de la première section de guide d'ondes creux (110) à la section de liaison (120) au moyen d'un procédé de soudage au laser, en produisant par le soudage au laser au niveau d'une soudure entre la première section de guide d'ondes creux et la section de liaison pendant l'opération de soudage une masse fondue dynamique dans laquelle les constituants du premier alliage d'aluminium et du deuxième alliage d'aluminium sont mélangés.

2. Procédé selon la revendication 1,
dans lequel le procédé présente en outre :
le placement de la section de liaison (120) par rapport à la première section de guide d'ondes creux (110) de telle sorte que la section de liaison (120) s'appuie au moins ponctuellement sur la première section de guide d'ondes creux (110) ;
la liaison de la première section de guide d'ondes creux (110) à la section de liaison (120) au moyen du procédé de soudage au laser à l'emplacement où la section de liaison (120) s'appuie sur la première section de guide d'ondes creux (110).

3. Procédé selon la revendication 1 ou 2,
dans lequel le procédé présente en outre :
le placement de la section de liaison (120) par rapport à la première section de guide d'ondes creux (110) de telle sorte que la section de liaison (120) chevauche partiellement la première section de guide d'ondes creux (110) dans la direction longitudinale (115) de la première section de guide d'ondes creux (110).

4. Procédé selon la revendication 3,
dans lequel la section de liaison (120) entoure complètement la première section de guide d'ondes creux (110) dans la direction circonférentielle.

5. Procédé selon l'une quelconque des revendications précédentes,
dans lequel le guide d'ondes creux (100) comprend une deuxième section de guide d'ondes creux (130) ;
dans lequel la deuxième section de guide d'ondes creux (130) est raccordée à la section de liaison (120).

6. Procédé selon la revendication 5,
dans lequel la deuxième section de guide d'ondes creux (130) est conçue d'un seul tenant avec la section de liaison (120).

7. Procédé selon la revendication 5,
dans lequel la section de liaison (120) est conçue sous forme de manchon qui chevauche au moins partiellement aussi bien la première section de guide d'ondes creux (110) que la deuxième section de guide d'ondes creux (120) sur une surface extérieure respective dans la direction longitudinale et les entoure complètement dans la direction circonférentielle, le manchon étant relié à la première section de guide d'ondes creux (110) et à la deuxième section de guide d'ondes creux (120) par soudage au laser.

8. Procédé selon la revendication 5 ou 7,
dans lequel la deuxième section de guide d'ondes creux (130) contient un alliage d'aluminium associé à l'une des séries AWS suivantes : AWS-2000, AWS-6000, AWS-7000.

9. Procédé selon l'une quelconque des revendications précédentes,
dans lequel le deuxième alliage d'aluminium a une teneur en silicium de plus de 3 % en poids ;
dans lequel le premier alliage d'aluminium a une teneur en silicium d'au plus 3 % en poids.

10. Guide d'ondes creux (100) pour la transmission de signaux à haute fréquence, présentant :
une première section de guide d'ondes creux (110) présentant un premier alliage d'aluminium, le premier alliage d'aluminium étant associé à l'une des séries AWS suivantes : AWS-2000, AWS-6000, AWS-7000 ;
une section de liaison (120) contenant un deuxième alliage d'aluminium, le deuxième alliage d'aluminium étant associé à l'une des séries AWS suivantes : AWS-3000, AWS-4000, AWS-5000 ;
dans lequel la première section de guide d'ondes creux (110) et la section de liaison (120) sont reliées l'une à l'autre au moyen d'une soudure au laser ;
dans lequel la soudure au laser est issue d'une masse fondue dynamique dans laquelle les constituants du premier alliage d'aluminium et du deuxième alliage d'aluminium sont mélangés.
